(19) Europäisches Patentamt
European Patent Office
Office européen des brevets

(11) Publication number: 0 148 800 B1

(12) EUROPEAN PATENT SPECIFICATION

(45) Date of publication of patent specification: 08.11.89

(51) Int. Cl.$^4$: C 08 G 65/46

(21) Application number: 85400019.7

(22) Date of filing: 07.01.85

# (54) A process for the purification of polyphenylene ethers.

(30) Priority: 09.01.84 IT 1907584

(43) Date of publication of application:
17.07.85 Bulletin 85/29

(45) Publication of the grant of the patent:
08.11.89 Bulletin 89/45

(84) Designated Contracting States:
BE DE FR GB NL

(56) References cited:
EP-A-0 076 993
DE-A-2 105 372
DE-A-3 140 026
US-A-3 681 285

**The file contains technical information submitted after the application was filed and not included in this specification**

(73) Proprietor: Montedison S.p.A.
31, Foro Buonaparte
I-20121 Milan (IT)

(72) Inventor: Bottazzini, Nicola
37 Via Pierfrancesco Mola
Milan (IT)
Inventor: Quaglino, Marino
17 Via Boccaccio
Trecate (Novara) (IT)

(74) Representative: Hirsch, Marc-Roger
Cabinet Hirsch 34 rue de Bassano
F-75008 Paris (FR)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).



Courier Press, Leamington Spa, England.

**Description**

The present invention relates to a process for purifying polyphenylene ethers from the catalytic residues and the by-products formed during the preparation of said polyphenylene ethers said preparation being carried out by oxidative polymerization of alkylphenols by means of copper-amine catalysts.

Polyphenylene ethers and processes for the preparation thereof, are well known in the prior art, since they are disclosed in numerous publications, such as for instance U.S. patents 3306874, 3306875 and 4169114. The most currently used preparation method generally consists of polycondensing a monovalent phenol dissolved in a suitable organic solvent, for instance toluene or benzene, in the presence of an oxygen containing gas and of a catalytic system consisting of a metal-amine complex, the metal of which being preferentially copper.

As known, the following operations are necessary for purifying and isolating the polymer from the reaction mixture. Firstly, the catalytic system has to be removed, then it is necessary to initiate the decoloration of the obtained mass, that is generally deeply orange-coloured due to the presence of quinones and of other secondary reaction products; finally, the resin has to be isolated by pouring the mixture into a liquid wherein the polyether is insoluble. Methanol is generally used for this purpose. Processes according to the prior art concentrated great attention on the final two operation steps which form the purification step of the mixture.

The removal of the catalytic system was carried out in various ways, two of which are simple and efficient:

— extraction by means of an acid washing; and

— use of a suitable chelating agent of the metal present in the catalytic system.

The acid washing may be carried out either by using mineral acids, such as hydrochloric and sulphuric acid, or by using simple organic acids such as acetic acid. The chelating agents which according to the patent literature concerning this subject are the most currently used belong to the group of the polyaminocarboxylic and aminocarboxylic acids and respective alkaline salts thereof. However, other compounds are also cited, such as salicyclic acid, 8-oxyquinoline, triethanolamine, 1—4 pentadienone, α-α'dipyridyl and cationic resins having been suitably treated. German patent application DE—OS 3140025 discloses as complexing agents of the copper, thiol compounds which are directly added to the basic polymerization mixture.

Decoloration was obtained by using numerous processes, which generally utilize reducing substances. Therefore, use was made of sulphites, bisulphites, phosphites, hydrosulphites, thiosulphates of various metals in a more or less alkaline medium; hydrazine and its derivatives; various metal-alkyl radicals among which lithium, sodium, zinc, aluminium radicals as well as other lithium and sodium-organic compounds and also, boron hydrides and boron-aluminium hydrides and hydrides of various metals among which lithium, sodium and zinc salts. A particular process disclosed in U.S. patent 4169114 consists in decolorizing the polyoxyphenyl resin, already isolated, by means of an amine under sufficient pressure. German patent application DE—OS 31400026, describes the use of the trisodic salt of 1,3,5-triazine-2,4,6-trithiol together with phosphonium salts to obtain a polymer which after heating at 280°C for 30 minutes, is only slightly colored while under the same conditions, by treatment with ethylenediaminetetracetic acid, a dark brown polymer is obtained.

The applicant has now observed that it is possible, in the case of polyphenylene ethers obtained by oxidative polycondensation of alkylphenols in the presence of copper-amine catalysts, to obtain a substantial decoloration of said polyphenylene ethers, as well as the elimination of the catalytic copper up to, but not exceeding, 10 ppm, by treating a solution of the polymer, that may be the same mixture than that coming directly from the polymerization of the alkylphenols, with one or more compounds containing at least one sulphydryl-SH (thiols) function, as hereinafter defined, in an acid medium.

Such compounds containing at least one sulfhydryl function have the following general formula:

$$R—(SH)_n \qquad (I)$$

wherein:

n = an integer ranging from between 1 and 6, extremes included;

R may be:

a) a linear or branched alkyl radical containing from 1 to 16 carbon atoms, which can contain, as substituents alkoxy groups having 1—6 carbon atoms, amino, sulfonic, carboxylic groups, halogens, nitro ($—NO_2$), or sulfhydryl (—SH) groups in such number as to maintain the value of *n* no higher than 6;

b) an aryl, alkylaryl, aralkyl, heterocyclic, cycloalkyl radical, containing from 6 to 16 carbon atoms, optionally comprising substituent groups such as alkyl groups having 1—6 carbon atoms, alkoxy groups having 1—6 carbon atoms, amino, hydroxy, sulfonic, carboxyl, nitro, halogeno and sulfhydryl groups, in such number as to maintain the value of *n* is no higher than 6;

c) a hydrocarbon radical containing two condensed benzene rings or two or more non-condensed benzene rings, optionally having substituent groups such as halogens, amino, sulfonic, hydroxyl, carbox ylic, nitro and sulfhydryl groups in such number than *n* is no higher than 6, alkyl and/or alkoxy groups having 1—6 carbon atoms;

d)

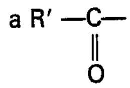

group, wherein R' may be a linear or branched alkyl radical containing from 1 to 16 carbon atoms, optionally containing in the chain, amino, hydroxyl, sulfonic, nitro, carboxyl, halogen substituent groups or sulfhydryl groups in such number than *n* is no higher than 6; or R' may be an aryl, alkylaryl, aralkyl, cycloalkyl, or heterocyclic radical containing from 6 to 16 carbon atoms, which may optionally contain substituents such as alkyl and/or alkoxy groups having 1—6 carbon atoms, halogen atoms, sulfonic, carboxyl, hydroxyl, amino, nitric groups and sulfhydryl groups in such number that *n* is no higher than 6;

e)

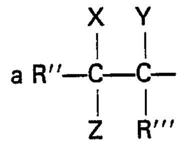

group wherein R'' = hydroxy group, R''', X, Y, Z, identical or different, may represent hydrogen, alkyl and/or alkoxy radicals, having from 1 to 12 carbon atoms, or aryl, araylalkyl, alkylaryl, cycloalkyl, heterocyclic groups, containing from 6 to 16 carbon atoms.

R is preferably an alkyl radical containing from 1 to 12 carbon atoms which possibly comprise the substituent groups mentioned hereinabove or is a radical having one of the following general formulas:

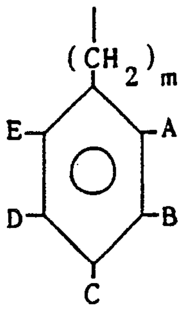 (II)

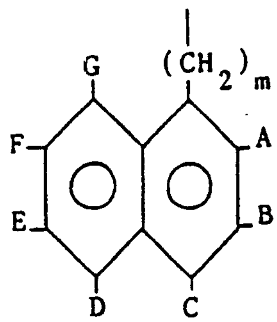 (III)

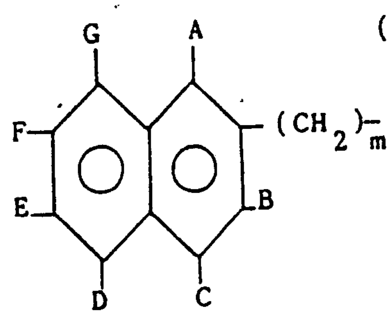 (IV)

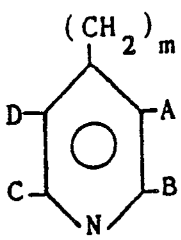 (V)

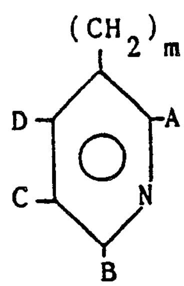 (VI)

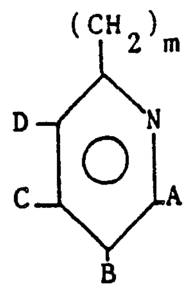 (VII)

wherein:

N = nitrogen;

m = a whole number ranging from between 0 and 3, extremes included, A, B, C, D, E, F, G, identical or different, can be hydrogen or halogen atoms, or nitro, amino, carboxylic, sulphonic, alkyl and/or alkoxy groups containing from 1 to 6 carbon atoms, or sulfhydryl (—SH) groups in such number as to maintain the value of n in formula (I) no higher than 6;

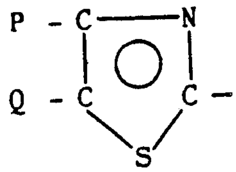 (VIII)

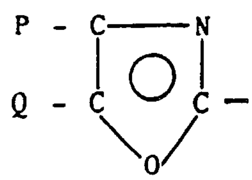 (VIIIbis)

wherein:

P and Q may be hydrogen atoms or alkyl radicals containing from 1 to 6 carbon atoms, or P and W together constitute a hydrocarbyl radical formed of a chain of 4 carbon atoms condensed with such a heterocyclic nucleus

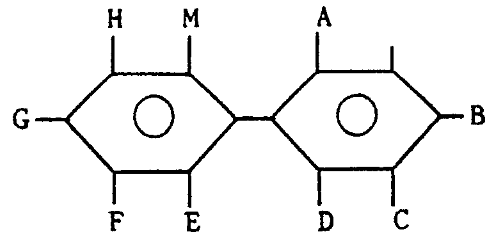

(IX)

wherein:

A, B, C, D, E, F, G, H, M identical or different can be hydrogen or halogen atoms, or amino, alkoxy, nitric, sulphonic, alkyul and/or alkoxy groups containing from 1 to 6 carbon atoms, or sulfhydryl groups in such number as to maintain the value of *n* in formula I no higher than 6;

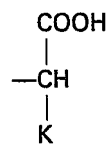

(X)

wherein:

K may be hydrogen, or an alkyl radical containing from 1 to 16 carbon atoms, forming a linear or a branched chain, optionally containing substituents, such as carboxyl and/or aryl, alkylaryl, aralkyl or cycloalkyl groups containing from 6 to 16 carbon atoms or sulfhydryl groups in such number as to maintain the value of *n* in formula I no higher than 6, or K may be a radical of the type

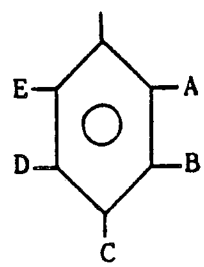

(XI)

wherein:

A, B, C, D, E have the meaning designated hereinabove for formulae (II) to (VII).

R′ is preferably an alkyl radical containing from 1 to 12 carbon atoms, optionally containing the substituent groups hereinbefore mentioned for R′, or is a cycloalkyl or heterocyclic radical, or a radical having the following general formula:

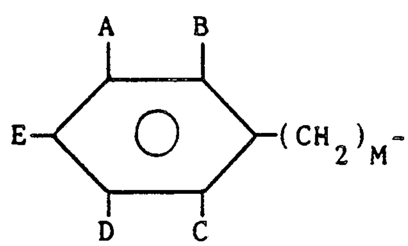

(XII)

wherein:

m = an integer ranging from between 0 and 3, extremes included, and

A, B, C, D, E have the meaning expressed in formulae II to VII.

The object of the present invention is also a process for the purification of polyphenylene ethers, obtained by oxidative polycondensation of alkylphenols in the presence of copper-amine catalysts, which consists in treating a solution of the polymer with one or more compounds falling in the general formulae described hereinabove, in an acid medium.

The process of the present invention refers to polyphenylene ethers which have the general formula

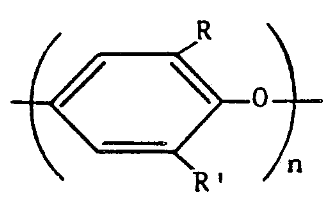

wherein the oxygen of a unit is bound to the benzene nucleus of the subsequent unit

n is a number no higher than 50;

R and R′ are monovalent substituents selected from among hydrogen, halogens, alkyl radicals, haloalkyl radicals with at least two carbon atoms being comprised between the halogen atom and the benzene nucleus.

The preferred polyphenylene ether is poly(2,6-dimethyl-1,4-phenylene) ether.

Examples of compounds containing at least one sulfhydryl function, presenting general formula (I) and more particularly narrower general formulae (II) to (VII) are thiophenol, 2-aminothiophenol, benzyl mercaptan, 2-naphthylmercaptan, 2-mercapto-benzoic acid, thiobenzoic acid, 2,4-dichlorobenzenthioglycolic acid, 2-mercaptopyridine, thioacetic acid, thiomalic acid, thiolactic acid, cysteine, thioglycolic acid, 2-mercaptoethanol, ethanethiol, 2-propanethiol, 1-octanethiol, 1-dodecanethiol, t.butylthiol, 1,3-propanedithiol, 1,2-ethanedithiol, 1,4-butanedithiol, 1,3-dimercapto-2,2-pentamethylenpropane, 2,2′-thiobisheptanol, 1,1′-thiobis-2-propanethiol, dimercaptophenol, 2-oxy-trimercaptonaphthalene, trimercapto-aniline, β-amino-naphtalide of thioglycolic acid, trimercapto-s-triazine.

Examples of sulfhydryl compounds, having in particular narrower general formula (VIII) are mercaptobenzothiazole, mercaptobenzooxazole.

Examples of compounds comprised in narrow formula (IX) are O,O′-dimercapto benzidine, O,O′-dimercapto-o-tolidine, O,O′-dimercapto-o-dianisidine.

The amount of thiol used in the process of this invention can vary within very large limits. Generally, the quantity used is function of the quantity of the polyphenylic ethers to be treated and more particularly to the more or less important presence of quinones and other secondary coloured products, as well as to the amount of metal, generally copper, to be removed, initially contained in the catalytic complex employed in the polymerization reaction.

Generally, satisfactory elimination of copper and decoloration is already obtained with 0.5 parts by weight of thiol per 100 parts of polymer.

As to the maximum values of thiol to be used, an excess of such an agent is generally not harmful but, on the contrary, accelerates and renders more complete the action of the agent itself. No purification parameter undergoes any further improvement over a certain quantity threshold. Such threshold can be set within the value of 50 parts of thiol per 100 parts of polymer, preferred values being comprised between 2 and 20.

The purification process of polyphenylene ether, or of reaction mixtures containing the polyphenylene ether, according to the present invention, consists in bringing the polyether and the thiol into contact under conditions so as to obtain the most favourable results from the point of view of decoloration and removal of the metal present in the catalytic complex.

Such conditions, to be specified, relate especially to the reaction medium and thereafter to the contact time and temperature between thiol and polymeric mixture.

According to the first condition the thiol has to be reacted in an acid medium. The pH of the possible aqueous extract, obtained from the reaction mixture, can vary within large limits also depending on the intrinsic acidity of the thiol itself which is added said pH however, generally ranges between 0 and 6.

The decoloration reaction is favoured by the trace presence of polar liquids, such as water, alcohols, etc., that may be the same liquids, for example water, which are formed during the polymerization reaction, or for example alcohols, which are used to separate the polyphenylene ether from the polymerization mixture.

Therefore, in order to carry out the invention, it is essential to render acid the reaction medium and, to this purpose, it is easier to utilize aqueous diluted solutions of mineral acids, such as hydrochloric, sulphuric, phosphoric acid and solutions of simple organic acids such as acetic acid. Acids having in their molecule a sulfhydryl function, such as for instance thioglycolic, thiolactic, thiomalic acid can be also used. When these latter are used in a sufficient quantity they can act simultaneously as acidifying and as purifying agent. In general, however, the two agents are distinct and it is possible to add them contemporaneously to the polymeric mixture with only one aqueous solutions or one after the other; firstly the acid and thereafter the thiol or vice versa. The acidification can even be considered as a totally different operation and be carried out separately.

Thereafter the subsequent contact between the thiol and polymeric mixture is carried out after having extracted from said mixture the aqueous phase containing the acid. In this case, the thiol may be added, either alone, or together with the acidifying agent in only one aqueous solution or separately in one of the two possible addition orders.

Contact time and temperature, depend upon each other and upon the amount of purifying agent which is used, i.e. by using a large excess of purifying agent the polymeric mixture is, sometimes, immediately decolorized at room temperature. Generally, the use of long periods of time, in the order of 10—20 hours, favours utilization of low temperatures and the most complete purification.

However, when the invention is carried out by means of a process using temperatures ranging between 20° and 90°C in a container optionally provided with a reflux cooler and under strong stirring, the mixture purification is generally satisfactory with contact times ranging between a few minutes and not more than a few hours, and depending upon the kind and the amount of the thiolic reactant used.

The process can also be carried out, by effecting, after treatment of the polymeric mixture with thiol in

an acid medium (during which both decoloration phenomenon and complexation of copper as insoluble product take place) an alkalinization of the reaction medium up to a pH higher than 7, thereby obtaining the dissolution of the copper complex formed and rendering easier the subsequent separation from the polymer.

The process object of the present invention has the advantage, in comparison with those of the prior art, of needing only one agent, that simultaneously removes the catalyst metal and decolorizes the polymer by means of an acid treatment generally of mild nature. This is in important contrast to the method described in DE—OS 3140025, according to which, by using a thiol derivative in a basic solution, such as the amino one, issuing from the polymerization reaction, no decoloration of polyphenylene ether (or of the reaction mixture containing such a polyether) can be obtained.

The following examples will illustrate the process of the present invention.

Such examples refer to the purification of poly-(2,6-dimethyl-1,4-phenylene) ether prepared by oxidative polycondensation of the monomer in the presence of copper-amine catalysts.

In the examples, all the parts and percentages are by weight, unless otherwise specified. The polymer colour is determined by measuring the percentage of transmission at 425 nanometers of a solution at 2% in chloroform.

A spectrophotometer Beckman DU having cells 1 cm thick was utilized to carry out this measurement. The higher the transmission percentage, the lower the colour in the resin. The colour number of the polymer is calculated by the formula:

$$\frac{(100 - \%\text{transmission})}{10}$$

Control Example

A polymerization catalyst was prepared by adding 16.5 g of n-butylamine, dissolved in 50 ml of toluene, to a solution consisting of 0.615 g cupric bromide in 4 ml of methanol. This catalyst was introduced, together with 320 ml of toluene into a one litre capacity reactor, provided with a cooling jacket, a stirrer, a reflux cooler and an inlet pipe for oxygen. The mixture was stirred at a speed of 1500 rpm then oxygen was introduced at a speed of 28.38 l/h. Contemporaneously, over a time period of 55 minutes, a solution of 140 g of 2.6-xylenol in 160 ml of toluene, was fed into the reactor, through a pump.

Then 50 ml of additional toluene were added into the reactor through the pump. The temperature was kept at 30°C; after an hour, it was increased to 40°C and the oxygen flow was lowered to 3.6 l/h.

Two hours after the start of the reaction, the mixture was diluted into toluene, so that the content of polyphenylene ether was equal to 10%. The pH of the aqueous extract of said mixture ranged between 9.5 and 10. The mixture, non treated with acetic acid, was poured into methanol in order to precipitate the polymer, that was then separated by filtration washed and dried at 80°C and 5.320 kPa. The polymer analysis gave the following results: colour number = 10, residual copper contant = 1200 ppm. The polymer obtained amounted to about 139.5 g.

Examples 1—15

A reaction mixture, prepared and diluted with toluene, as described in the control example was used. In each example, 100 g of said mixture were treated with 20 g of an aqueous solution containing 10% of acetic acid and the amount of thiolic compound necessary to obtain a thiol/polymerized alkyl phenol molar ratio equal to 0.05. The pH of the aqueous phase after acidification was equal to 4. The treatment was carried out under stirring for 15 minutes at constant temperature in a container under reflux. The separation of the phase was obtained either by centrifugation at 3000 rpm for 15 minutes or by filtration and then decantation in a separatory funnel. The toluenic phase was poured, under stirring, into methanol, in order to precipitate the poly (2.6-dimethyl-1.4 phenylene) ether, that was then separated by filtration, washed and dried at 80°C and 5.320 kPa.

The conditions of examples 1 to 15, and the results obtained related to the residual copper content and to the colour number of the polymer, are recorded on Table 1.

Example 16

100 g of polymerization mixture prepared and diluted as in the control example was used, the procedure being identical to that of examples 1—15, the treatment temperature being kept constant at 35°C; the phases being separated by filtration and decantation in a separatory funnel, with the difference that the washing solution, instead of consisting of acetic acid and a thiol, consisted of 20 g of an aqueous solution containing 7.55% of thioglycolic acid.

The pH of the aqueous phase, after addition of said solution was about 3. The polymer thus purified, gave the following results: colour number = 2.0; residual copper content = 10 ppm.

Example 18

100 g of the polymerization mixture prepared and diluted as described in the control example are used the procedure being identical to that of examples 1—15, the treatment temperature being kept constant at 35°C and the phase separated by centrifugation, by using a washing solution consisting of 20 g of an aqueous solution with 2.82% of sulphuric acid and 1.89% of thioglycolic acid. The pH of the aqueous solution was equal to 1. The analysis of the polymer thus purified, gave the following results: colour number = 2.8; residual copper content = 2 ppm.

Example 19

Operation procedure was identical to that of example 18, using, however, 20 g of an aqueous solution containing 2.10% of hydrochloric acid and 1.89% of thioglycolic acid as washing solution. The pH of the aqueous phase was = 0.5. The analysis of the polymer thus purified, gave the following results: colour number = 3.1; residual copper content = 2 ppm.

Example 20

Operation procedure was identical to that of example 18, using, however, an aqueous solution containing 2.82% of sulphuric acid and 2.17% of thiolactic acid as washing solution. The pH of the aqueous phase was = 1. The analysis of the polymer thus purified, gave the following results: colour number = 2.9; residual copper content = 5 ppm.

Example 21

Operation procedure was identical to that of example 18, using, however, 20 g of an aqueous solution containing 3.76% of phosphoric acid and 3.07% of thiomalic acid as washing solution. The pH of the aqueous phase was = 2. The analysis of the polymer thus purified, gave the following results: colour number = 2.9; residual copper content = 18 ppm.

Examples 22—26

The reaction mixture prepared and diluted with toluene as described in the control example was utilized.

In each example, 100 g of said mixture were treated with 20 g of an aqueous solution containing 10% of acetic acid. After stirring the mixture for 15 minutes, the separation of the phases was obtained by decantation in a separatory funnel. After removal of the aqueous phase, the toluenic phase, containing a residual dissolved aqueous solution at pH = 5, was treated with a sufficient amount of thiolic compound so that the thiol/xylenol ratio was equal to 0.05 by moles. Treatment was carried out under stirring for 15 minutes at constant temperature in a container under reflux. Then, the whole was poured, under stirring, into methanol, in order to precipitate the poly-(2.6-dimethyl-1.4 phenylene) ether, that was then separated by filtration, washed and dried at 80°C and 5.320 kPa. The conditions of the examples, with the obtained results, related to the residual copper content and to the colour number of the polymer, are recorded in Table II.

Examples 27—33

The reaction mixture prepared and diluted with toluene as described in the control example was used. In each example, 20 g of an aqueous solution containing 10% of acetic acid were added to 100 g of said mixture. The pH of the aqueous phase was = 4. After stirring the mixture for 15 minutes, the separation of the phases was obtained by decantation in a separatory funnel. After removal of the aqueous phase, the toluenic phase was treated with 20 g of an aqueous solution containing 10% of acetic acid and an amount of thiol sufficient for the thiol/xylenol ratio to be equal to 0.05 by moles. The pH of the aqueous phase was = 3. The treatment was carried out under stirring for 15 minutes at constant temperature in a container under reflux.

After separation of the phase by decantation in a separatory funnel and removal of the aqueous phase, the mixture was poured, under stirring into methanol in order to precipitate the poly-(2.6-dimethyl-1.4 phenylene) ether, that was then separated by filtration, washed and dried at 80°C and 5.320 kPa. The single examples with the obtained results, related to the residual copper content and to the colour number of the polymer are recorded in Table III.

TABLE I

| Example | Reactant | Treatment T (°C) | Phase Separation | Color Number | Residual CU (ppm) |
|---|---|---|---|---|---|
| 1 | Thioglycolic acid | 35 | filtr. and decant. | 2.8 | 3 |
| 2 | Thiomalic acid | 35 | centrif. | 2.8 | 10 |
| 3 | Thiolactic acid | 35 | centrif. | 2.8 | 12 |
| 4 | 2-mercaptoethanol | 35 | centrif. | 2.8 | 3 |
| 5 | Thiophenol | 35 | filtr. and decant. | 4.6 | 16 |
| 6 | 2-mercaptobenzoic acid | 35 | centrif. | 2.7 | 28 |
| 7 | Ethanthiol | 50 | centrif. | 5.3 | 5 |
| 8 | 2-propanthiol | 50 | centrif. | 3.0 | 5 |
| 9 | 2-mercaptopyridine | 80 | centrif. | 1.7 | 17 |
| 10 | 2,4 dichlorobenzene-thioglycolic acid | 80 | centrif. | 3.5 | 10 |
| 11 | 1,3 propandithiol | 35 | centrif. | 2.5 | 6 |
| 12 | 1,2 ethandithiol | 35 | centrif. | 2.8 | 4 |
| 13 | 1-butanthiol | 60 | centrif. | 3.3 | 8 |
| 14 | 2-aminothiophenol | 35 | filtr. and decant. | 2.3 | 24 |
| 15 | Thiobenzoic acid | 60 | centrif. | 1.6 | 22 |

TABLE II

| Example | Reactant | Treatment T (°C) | Color Number | Residual CU (ppm) |
|---|---|---|---|---|
| 22 | 1-octanthiol | 80 | 2.4 | 6 |
| 23 | Benzyl mercaptan | 60 | 1.6 | 8 |
| 24 | 2-naphtylmercaptan | 35 | 1.8 | 7 |
| 25 | Tert-butyl mercaptan | 50 | 2.8 | 3 |
| 26 | 1-dodecanthiol | 80 | 2.8 | 13 |

TABLE III

| | | | | |
|---|---|---|---|---|
| 27 | L-cysteine | 50 | 4.7 | 3 |
| 28 | Thioacetic acid | 50 | 2.1 | 12 |
| 29 | Thioglycolic acid | 35 | 2.2 | 3 |
| 30 | Thiolactic acid | 35 | 2.3 | 3 |
| 31 | 2-mercaptoethanol | 35 | 2.7 | 3 |
| 32 | 2-mercaptobenzothiazole | 60 | 3.1 | 11 |
| 33 | 2-mercaptobenzooxazole | 60 | 3.8 | 12 |

Example 34

100 g of the polymerization mixture prepared and diluted according to the control example was used. It was then acidified with 20 g of acetic acid at 10% and 0.377 g of thioglycolic acid were added. The pH of the aqueous phase was = 4. The mixture was kept under stirring for 15 minutes at 35°C, then an aqueous solution of sodium hydroxide at 1% was added under stirring for 15 minutes at room temperature, thereby obtaining a pH = 7.5. The mixture was transferred into a separatory funnel, the aqueous phase was allowed to decantate and then was separated.

The organic phase was precipitated and washed in methanol and the polymer was dried. The copper content was 5 ppm; the colour number was = 3.

**Claims**

1. A process for the purification of polyphenylene ethers, prepared by oxidative polycondensation of alkylphenols in the presence of copper-amine catalysts, by treating a solution of the polymer with one or more compounds containing at least one sulfydryl (SH) function characterized in that said treatment is carried out in an acid medium, with at least a compound having the general formula:

$$R—(SH)_n \qquad (I)$$

wherein:

n = an integer ranging from between 1 and 6, extremes included;

R may be:

a) a linear or branched alkyl radical containing from 1 to 16 carbon atoms, which can contain, as substituents alkoxy groups having 1—6 carbon atoms, amino, sulfonic, carboxylic groups, halogens, nitro ($—NO_2$), or sulfhydryl (—SH) groups in such number as to maintain the value of *n* no higher than 6;

b) an aryl, alkylaryl, aralkyl, etherocyclic, cycloalkyl radical, containing from 6 to 16 carbon atoms, optionally comprising substituent groups such as alkyl groups having 1—6 carbon atoms, alkoxy groups having 1—6 carbon atoms, amino, hydroxy, sulfonic, carboxyl, nitro, halogeno and sulfhydryl groups, in such number as to maintain the value of *n* is no higher than 6;

c) a hydrocarbon radical containing two condensed benzene rings or two or more non-condensed benzene rings, optionally comprising on the benzene rings having substituent groups such as halogens, amino, sulfonic, hydroxyl, carbox ylic, nitro and sulfhydryl groups in such number than *n* is no higher than 6, alkyl and/or alkoxy groups having 1—6 carbon atoms;

d)

$$a\ R'—\underset{\underset{O}{\|}}{C}—$$

group, wherein R' may be a linear or branched alkyl radical containing from 1 to 16 carbon atoms, optionally containing amino, hydroxyl, sulfonic, nitro, carboxyl, halogen substituent groups or sulfhydryl groups in such number than *n* is no higher than 6; or R' may be an aryl, alkylaryl, aralkyl, cycloalkyl, or heterocyclic radical containing from 6 to 16 carbon atoms, which may optionally contain substituents such as alkyl and/or alkoxy groups having 1—6 carbon atoms, halogen atoms, sulfonic, carboxylic, hydroxy, amino, nitric groups and sulfhydryl groups in such number that *n* is no higher than 6;

e)

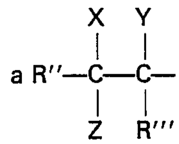

group wherein R'' = hydroxy group, R''', X, Y, Z, identical or different, may represent hydrogen, alkyl and/or alkoxy radicals, having from 1 to 12 carbon atoms, or aryl, araylalkyl, alkylaryl, cycloalkyl, heterocyclic groups, containing from 6 to 16 carbon atoms.

2. A process according to claim 1, wherein the polymer solution consists of the mixture resulting directly from the oxydative polycondensation of alkylphenols.

3. A process according to claim 1 or 2, wherein R is either an alkyl radical containing from 1 to 12 carbon atoms which, possibly, presents the substituent groups mentioned in point a), or a radical represented by one of the following general formulae:

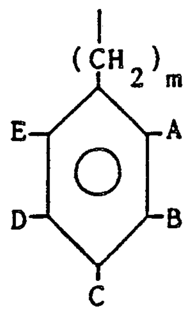 (II)

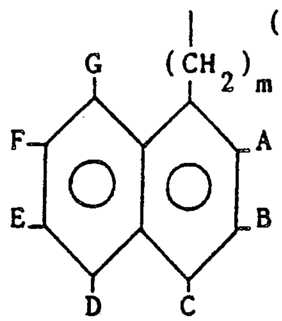 (III)

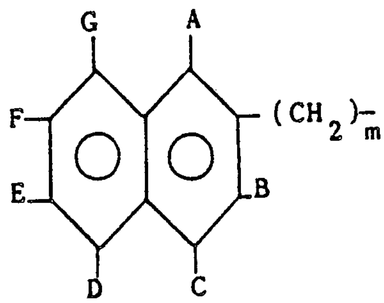 (IV)

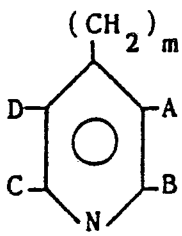 (V)

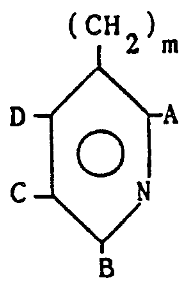 (VI)

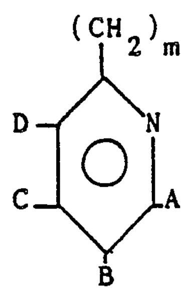 (VII)

wherein:

N = nitrogen;

m = an integer ranging from between 0 and 3, extremes included, A, B, C, D, E, F, G, identical or different, can be hydrogen or halogen atoms, or nitro, amino, carboxylic, sulphonic, alkyl and/or alkoxy groups containing from 1 to 6 carbon atoms, or sulfhydryl (—SH) groups in such number as to maintain the value of n in formula (I) no higher than 6;

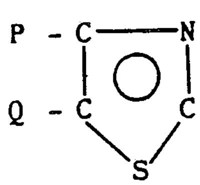 (VIII)

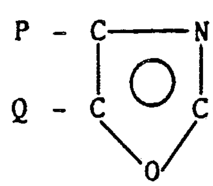 (VIIIbis)

wherein:

P and Q may be hydrogen atoms or alkyl radicals containing from 1 to 6 carbon atoms, or P and Q together constitute a hydrocarbyl radical formed of 4 carbon atoms condensed with the heterocyclic nucleus

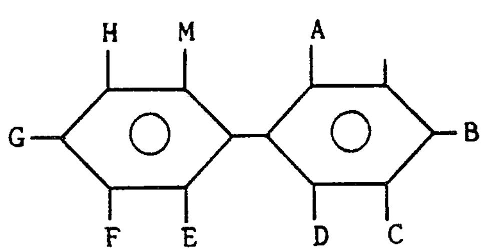 (IX)

wherein:

A, B, C, D, E, F, G, H, M identical or different can be hydrogen or halogen atoms, or amino, alkoxy, nitric, sulphonic, alkyl and/or alkoxy groups containing from 1 to 6 carbon atoms, or sulfhydryl groups in such number as to maintain the value of *n* in formula I no higher than 6;

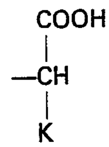

wherein:

K may be hydrogen, or a linear or branched alkyl radical containing from 1 to 16 carbon atoms, optionally containing substituents, such as carboxyl and/or aryl, alkylaryl, aralkyl or cycloalkyl groups containing from 6 to 16 carbon atoms or sulfhydryl groups in such number as to maintain the value of *n* in formula I no higher than 6, or K may be a radical of the type

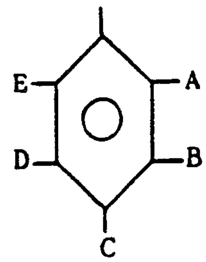

(XI)

wherein:

A, B, C, D, E have the signification designated hereinabove for formulae (II) to (VII).

4. A process according to claims from 1 to 3, wherein R' is an alkyl raical containing fro 1 to 12 carbon atoms, optionally comprising the substituent groups mentioned at point d) or is a cycloalkyl or heterocyclic radical or a radical having the following general formula:

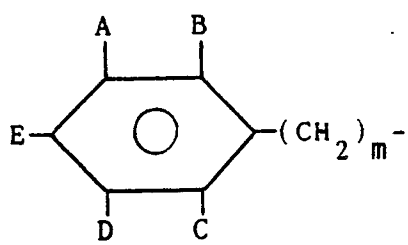

(XII)

wherein:

m = an integer ranging from between 0 and 3, extremes included, and

A, B, C, D, E have the meaning given in formulae II to VII.

## Patentansprüche

1. Verfahren zur Reinigung von durch oxydierende Alkylphenol-Polykondensation in Anwesenheit von Kupferamin-Katalysatoren hergestelltem Polyphenylenäther, bei dem eine Lösung des Polymerisats mit wenigstens einer wenigstens eine Sulfohydrilfunktion (SH) enthaltenden Verbindung behandelt wird, dadurch gekennzeichnet, dass diese Behandlung in einem sauren Medium mit wenigstens einer Verbindung folgender allgemeinen Formel (I) durchgeführt wird:

$$R{-}(SH)_n \qquad (I)$$

wobei:

*n* eine ganze Zahl von einschliesslich 1 bis einschliesslich 6 ist und *R* bedeuten kann:

a) ein lineares oder verzweigtes Alkylradikal mit 1 bis 16 Kohlenstoffatomen, das mit Alkoxygruppen mit 1 bis 6 Kohlenstoffatomen, Aminogruppen, Sulfongruppen, Karboxylgruppen, Halogenen, Nitrogruppen ($-NO_2$) oder Sylfohydrilgruppen ($-SH$) substituiert sein kann, deren Anzahl derart gewählt ist, dass *n* den Wert von 6 nicht überschreitet;

b) ein 6 bis 16 Kohlenstoffatome enthaltendes Aryl-, Alkylaryl-, Aralkylradikal, ätherzyklisches oder Zykloalkylradikal, gegebenenfalls mit Substitutionsgruppen, wie 1 bis 6 Kohlenstoffatome enthaltende Alkylgruppen, 1 bis 6 Kohlenstoffatome enthaltende Alkoxygruppen, Aminogruppen, Hydroxygruppen, Sulfon-, Karboxyl-, Nitro-, Halogen- und Sulfohyrilgruppen, deren Anzahl derart gewählt ist, dass *n* den Wert von 6 nicht überschreitet;

c) ein zwei kondensierte Benzolringe oder wenigstens zwei nicht kondensierte Benzolringe

enthaltendes Kohlenwasserstoffradikal, bei dem ggf. die Benzolringe Substitutionsgruppen aufweisen, wie Halogene, Amino- Sulfon-, Hydroxyl-, Karboxyl-, Nitro- und Sulfohydrilgruppen, deren Anzahl derart gewählt ist, dass *n* nicht grösser als 6 ist, ferner Alkylk- und/oder Alkoxygruppen mit 1 bis 6 Kohlenstoffatomen;

d) eine

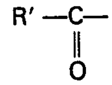

Gruppe, wobei R′ ein 1 bis 16 Kohlenstoffatome enthaltendes, lineares oder verzweigtes Alkylradikal sein kann, das ggf. Amino-, Hydroxyl-, Sulfon-, Nitro-, Karboxyl- Halogensubstitutions- oder Sulfohydrilgruppen enthalten kann, deren Anzahl derart gewählt ist, dass *n* nicht 6 übersteigt; und wobei R′ auch ein 6 bis 16 Kohlenstoffatome besitzendes Aryl-, Alkylaryl-, Aralkyl-, Zykloalkylradikal oder heterozyklisches Radikal sein kann, das ggf. substituiert ist mit 1 bis 6 Kohlenstoffatome enthaltenden Alkyl- und/oder Alkokxygruppen, sowie mit Halogenatom, Sulfongruppen, Karboxygruppen, Hydroxy-, Amino-, Nitro- und Sulfohydrilgruppen, deren Anzahl derart gewählt ist, dass *n* 6 nicht übersteigt;

e) eine

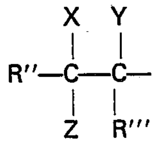

Gruppe wobei R″ eine Hydroxygruppe ist, während R‴, X, Y, Z, die gleichartig oder unterschiedlich sein können, Wasserstoff, Alkyl und/oder Alkoxylradikale mit 1 bis 12 Kohlenstoffatomen, sowie 6 bis 16 Kohlenstoffatome enthaltende Aryl-, Arylalkyl, Zykloalkylgruppen bzw. heterozyklische Gruppen sein können.

2. Verfahren nach Anspruch 1, bei welchem die Polymersatlösung aus dem unmittelbar aus der oxydierenden Polykondensation von alkylphenolen herrührenden Gemisch besteht.

3. Verfahren nach Anspruch 1 oder 2, bei welchem R entweder ein 1 bis 12 Kohlenstoffatome enthaltendes Alkylradikal, ggf. mit den unter a) genannten Substitutionsgruppen oder ein einer der nachstehenden allgemeinen Formeln entsprechendes Radikal ist:

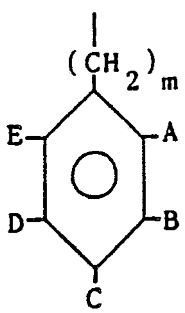
(II)

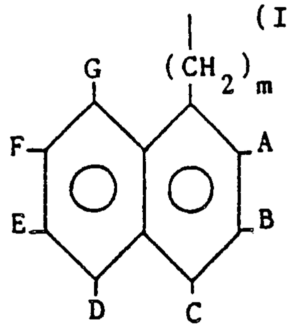
(III)

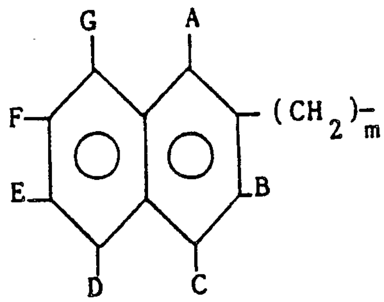
(IV)

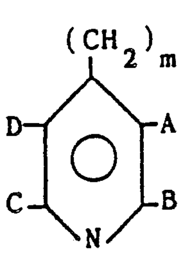
(V)

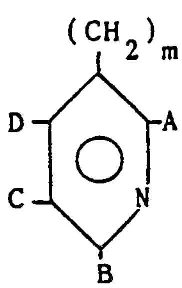
(VI)

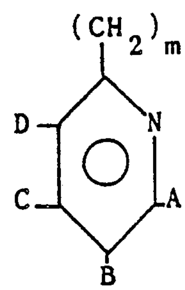
(VII)

wobei:

N = Stickstoff;

m = eine ganze Zahl von einschleisslich 0 bis 3, während A, B, C, D, E, F und G, gleich oder oder verschieden, und Wasserstoff oder Halogenatome oder Nitro-, Karboxyl-, Sulfon-, Alkyl- und/oder Alkoxygruppen mit 1 bis 6 Kohlenstoffatomen oder Sulfohydril (—SH)— Gruppen in einer Anzahl sein können, die derart gewählt ist, dass der Wert von *n* in Formel (I) nicht grösser ist als 6;

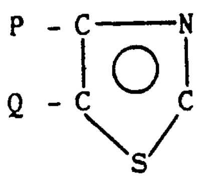 (VIII)

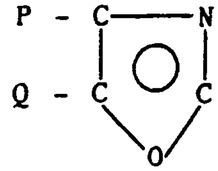 (VIIIbis)

wobei:

P und Q Wasserstoffatome oder Alkylradikale mit 1 bis 6 Kohlenstoffatome sein können, oder P und Q zusammen ein Hydrokarbylradikal mit 4 Kohlenstoffatomen bilden, kondensiert mit dem heterozyklischen Ring

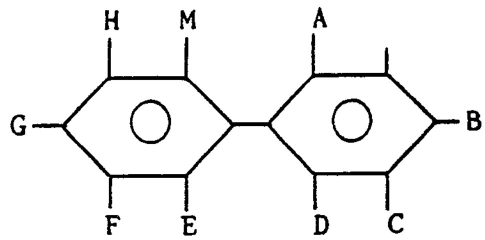 (IX)

wobei:

A, B, C, D, E, F, G, H und M gleich oder verschieden sein und Wasserstoff oder Halogenatome oder Amino-, Alkoxy-, Nitro-, Sulfon-, Alkyl- und/oder Alkoxygruppen mit 1 bis 6 Kohlenstoffatomen oder Sulfohydrilgruppen darstellen können in einer Anzahl, die derart gewählt ist, dass *n* in Formel I den Wert von 6 nicht überschreitet;

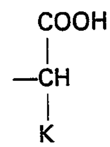

wobei:

K Wasserstoff oder ein lineares oder verzweigtes Alkylradikal mit 1 bis 6 Kohlenstoffatomen sein kann, das ggf. substituiert sein kann mit Karboxyl- und/oder Aryl-, Alkylaryl-, Aralkyl- oder Zykloalkylgruppen mit 6 bis 16 Kohlenstoffatomen, oder mit Sulfohydrilgruppen, deren Anzahl derart gewählt ist, dass *n* in Formel I den Wert von 6 nicht übersteigt, oder K kann ein Radikal des Typs

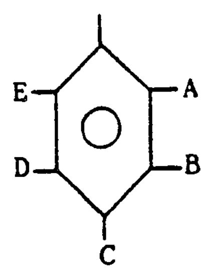 (XI)

sein, wobei:

A, B, C, D, E, die vorstehend für die Formeln (II) bis (VII) angegebene Bedeutung haben.

4. Ein Verfahren nach den Ansprüchen 1 bis 3, bei welchem R' ein 1 bis 12 Kohlenstoffatome besitzendes Alkylradikal ist, das ggf. die unter d) genannten Substitutionsgruppen enthält, oder bei welchem R' ein Zykloalkyl oder ein heterozyklisches Radikal oder ein Radikal mit folgender allgemeinen Formel ist:

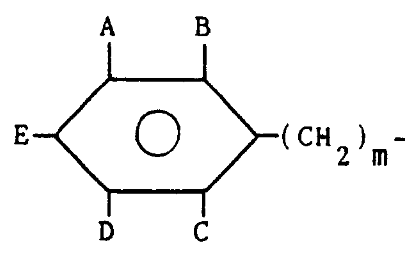 (XII)

worin:

m = eine ganze Zahl von einschliesslich 0 bis einschliesslich 3 ist und A, B, C, D und E die in den Formeln II bis VII angegebene Bedeutung haben.

**Revendications**

1. Un procédé de purification de polyphénylène éthers, préparés par polycondensation oxydante d'alkylphénols, en présence de catalyseurs à base de cuivre et d'amine, procédé qui comporte le traitement d'une solution du polymère avec un ou plusieurs composés renfermant au moins une fonction sulfhydryle (SH), caractérisé en ce que ledit traitement est mis en oeuvre dans un milieu acide en présence d'au moins un composé de formule générale:

$$R—(SH)_n \qquad (I)$$

où:

n = un nombre entier compris entre 1 et 6 bornes incluses

R peut être:

a) un radical alkyle linéaire ou ramifié contenant 1 à 16 atomes de carbone qui peut renfermer, en tant que substituants, des groupes alkoxy comportant 1 à 6 atomes de carbone, des groupes amino, sulfoniques, carboxyliques, des halogènes, des groupes nitro ($—NO_2$) ou sulfhydryles (—SH) en un nombre tel que la valeur de *n* ne soit pas supérieure à 6;

b) un radical aryle, alkylaryle, aralkyle, étherocyclique, cycloalkyle renfermant 6 à 16 atomes de carbone et renfermant, le cas échéant, des groupes de substitution tels que les groupes alkyle comportant 1 à 6 atomes de carbone, des groupes alkoxy en $C_1$ à $C_6$, des groupes amino, hydroxy, sulfoniques, carboxyle, nitro, halogéno et sulfhydryle en un nombre tel que la valeur de *n* ne soit pas supérieure à 6;

c) un radical hydrocarboné renfermant deux noyaux benzèniques condensés ou deux ou plus de deux noyaux benzèniques non-condensés, et renfermant, le cas échéant, sur les noyaux benzèniques des substituants tels que des halogènes, des groupes amino, sulfoniques, hydroxyles, carboxyliques, nitro ou sulfhydryles dont le nombre est tel que *n* ne soit pas supérieur à 6, ainsi que des groupes alkyles et/ou alkoxy en $C_1$ à $C_6$;

d) un groupe

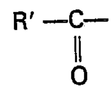

où R' peut être un radical alkyle linéaire ou ramifié renfermant 1 à 16 atomes de carbone, et contenant, le cas échéant, des groupes de substitution amino, hydroxyles, sulfoniques, nitro, carboxyles, halogènes ou des groupes sulfhydryles en nombre tel que *n* ne soit pas supérieur à 6; ou bien R' peut être un radical aryle, alkylaryle, aralkyle, cycloalkyle ou hétérocyclique contenant 6 à 16 atomes de carbone et qui peut, le cas échéant, renfermer des substituants tels que les groupes alkyle et/ou alkoxy comportant 1 à 6 atomes de carbone, des atomes d'halogènes, des groupes sulfoniques, carboxyliques, hydroxy, amino, nitriques et des groupes sulfhydryles en nombre tel que *n* ne soit pas supérieur à 6;

e) un groupe

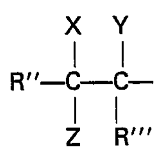

où R'' est un groupe hydroxy, R''', X, Y, Z, qui peuvent être identiques ou différents, peuvent représenter des atomes d'hydrogène, des radicaux alkyle et/ou alkoxy en comportant 1 à 12 atomes de carbone, des groupes aryle, arylalkyle, alkylaryle, cycloalkyle, hétérocycliques renfermant 6 à 16 atomes de carbone.

2. Un procédé selon la revendication 1, dans lequel la solution de polymère est constituée par le mélange résultant directement de la polycondensation oxydante d'alkylphénols.

3. Un procédé selon la revendication 1 ou 2, dans lequel R est soit un radical alkyle comportant 1 à 12 atomes de carbone et qui comporte le cas échéant les groupes substituants mentionnés dans le point a), ou bien un radical représenté par une des formules générales ci-après:

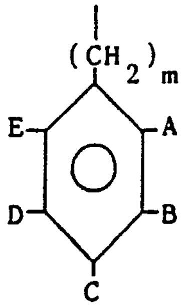 (II)

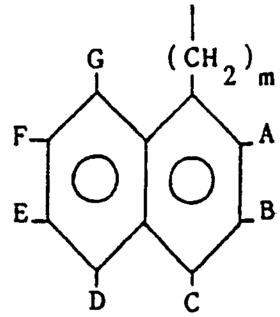 (III)

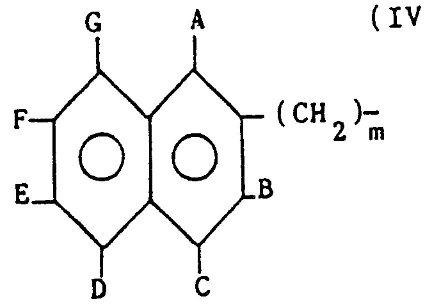 (IV)

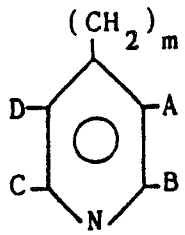 (V)

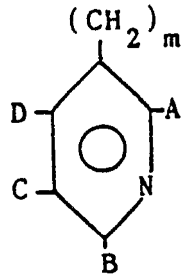 (VI)

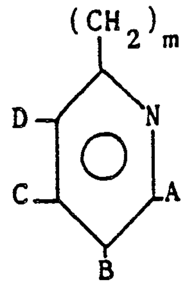 (VII)

où:

N = azote;

m = un nombre entier compris entre 0 et 3 bornes incluses, A, B, C, D, E, F, G, qui peuvent être identiques ou différents, pouvant être des atomes d'hydrogène ou d'halogènes ou encore des groupes nitro, amino, carboxyliques, sulfoniques, alkyles et/ou alkoxy comportant 1 à 6 atomes de carbone ou des groupes sulfhydryles (—SH) dont le nombre est tel que la valeur de n dans la formule (I) ne soit pas supérieure à 6;

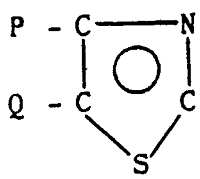 (VIII)

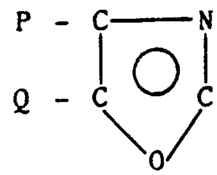 (VIIIbis)

où:

P et Q peuvent être des atomes d'hydrogène ou des radicaux alkyle renfermant 1 à 6 atomes de carbone, ou encore P et Q peuvent constituer ensemble un radical hydrocarboné formé de 4 atomes de carbone condensés avec le noyau hétérocyclique suivant:

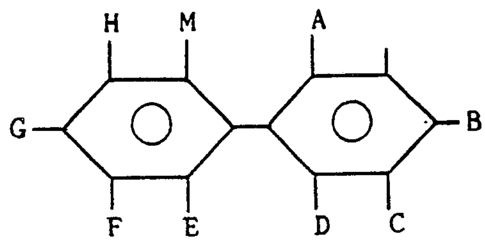 (IX)

où:

A, B, C, D, E, F, G, H, M, qui peuvent être identiques ou différents, peuvent être des atomes d'hydrogène ou d'halogènes ou des groupes amino, alkoxy, nitriques, sulfoniques, alkyles et/ou alkoxy en $C_1$ à $C_6$, ou encore des groupes sulfhydryles dont le nombre est tel que la valeur de *n* dans la formule I ne soit pas supérieure à 6;

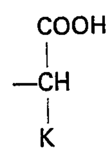

où:

K peut être de l'hydrogène ou un radical alkyle linéaire ou ramifié comprenant 1 à 16 atomes de carbone, qui peut renfermer, le cas échéant, des substituants tels que des groupes carboxyles et/ou aryles,

alkylaryles, aralkyles ou cycloalkyles comportant 1 à 16 atomes de carbone, ou encore des groupes sulfhydryles dont le nombre est tel que la valeur de *n* dans la formule I ne soit pas supérieure à 6, ou bien K peut être un radical du type

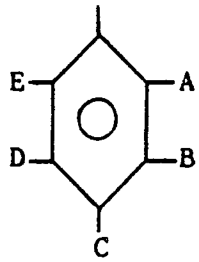

(XI)

où:

A, B, C, D, E ont la signification définie ci-dessus en référence aux formules (II) à (VII).

4. Un procédé selon les revendications 1 à 3 dans lequel R′ est un radical alkyle renfermant de 1 à 12 atomes de carbone et comprenant le cas échéant les groupes de substituants mentionnés au point d), ou encore R′ est un cycloalkyle ou un radical hétérocyclique ou un radical de formule générale:

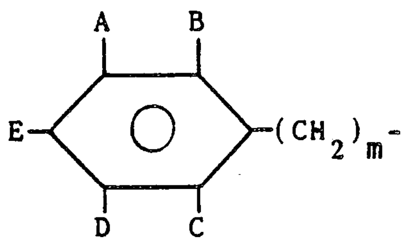

(XII)

où:

m = un nombre entier compris entre 0 inclus et 3 inclus, et A, B, C, D, E ont la signification indiquée en référence aux formules II à VII.